# EUROPÄISCHE PATENTSCHRIFT

(11) **EP 2 569 257 B1**
(45) Veröffentlichungstag und Bekanntmachung des Hinweises auf die Patenterteilung: **23.09.2015**
(21) Anmeldenummer: 11722730.6
(22) Anmeldetag: 04.05.2011
(51) Int. Cl.: C03B 3/00, C03B 5/04

(54) **Verfahren zum Aufheizen von Beschickungsgut in Glasschmelzwannen mit U-Flammenheizung**
Method for heating batch for an end-fired glass-melting furnace
Procédé pour le chauffage de la mtière première pour un four à boucle de fusion de verre

(30) Priorität: 11.05.2010 DE 102010020176
(43) Veröffentlichungstag der Anmeldung: 20.03.2013
(73) Patentinhaber: Beteiligungen Sorg GmbH & Co. KG, 97816 Lohr am Main (DE)
(72) Erfinder: LINDIG, Matthias, 55218 Ingelheim (DE); SORG, Alexander, 63739 Aschaffenburg (DE)
(74) Vertreter: Keil & Schaafhausen Patent- und Rechtsanwälte
(86) Internationale Anmeldenummer: PCT/EP2011/002217
(87) Internationale Veröffentlichungsnummer: WO 2011/141136

(56) Entgegenhaltungen:
- EP-A1- 0 580 048
- DE-U1- 8 304 858
- DE-U1-202009 014 937
- GB-A- 406 577
- GB-A- 1 067 240
- GB-A- 1 425 461
- US-A- 2 890 547
- US-A- 5 906 119
- ARGENT R D: "THE DOUGHOUSE SYSTEM", GLASS TECHNOLOGY, SOCIETY OF GLASS TECHNOLOGY, SHEFFIELD, GB, Bd. 35, Nr. 2, 1. April 1994 (1994-04-01), Seiten 61-65, XP000439146, ISSN: 0017-1050
- Tooley, F.V.: "The Handbook of Glass Manufacture", 1. Januar 1984 (1984-01-01), Ashlee Publishing Co,Inc., New York, XP002648008, ISBN: 0 911993-20-7 Bd. 1 Seite 295 - Seite 299

## Beschreibung

Die Erfindung betrifft ein Verfahren zum Aufheizen von Beschickungsgut in Glas-Schmelzwannen mit U-Flammenbeheizung gemäß den Merkmalen des Oberbegriffs des Anspruchs 1.

Es ist bekannt, dass das Einlegen von Beschickungsgut bei U-Flammenwannen bedeutend schwieriger und weniger befriedigend ist als bei Querbrennerwannen. Aus der GB 406 577 ist eine Glas-Schmelzwanne bekannt, bei der als Schmelzwanne eine Querbrennerwanne verwendet wird, die seitenbeheizt ist. Bei diesem Schmelzwannentyp wird das Beschickungsgut von der Rückwand aus zugeführt. Dafür ist in der Beschickungszone eine rückwärtige Öffnung im Oberbau vorgesehen, durch die das Beschickungsgut auf das Schmelzbad aufgelegt wird. Das Beschickungsgut wird durch das Nachlegen von hinten in Richtung Wannenmitte geschoben.

Ein weiterer Stand der Technik ist beispielsweise in der GB 1 067 240 beschrieben, die eine Floatwanne mit hintereinander abgestuft gesetzten Einlegevorbau-Bögen beschreibt.

Bei U-Flammenwannen kann die Einlage des Beschickungsguts jedoch nur seitlich von einer oder beiden Seiten der Schmelzwanne erfolgen, weshalb das Einlegen des Beschickungsguts wesentlich schwieriger ist als bei Querbrennerwannen. Bei den U-Flammenwannen sind einseitig oder beidseitig der Wannen-Längsachse sogenannte Einlegevorbauten ("Doghouse") vorgesehen, in die das Beschickungsgut von oben eingelegt und durch die stete Nachförderung der Einlegemaschinen auf der Oberfläche in Richtung der Schmelzwanne verschoben wird. Dies erfolgt aber nicht wie im Fall der seitenbeheizten Querbrennerwannen entgegen der Konvektionsströmung, sondern im rechten Winkel zur Strömung.

Bei U-Flammenwannen sind die Einlegevorbauten möglichst klein ausgebildet. Wenn die Einlegevorbauten jedoch zu klein gebaut werden, wird an der Oberfläche das noch nicht vorgeschmolzene Gemenge der mit hoher Geschwindigkeit darüber strömenden Flamme ausgesetzt. Dies führt zu einer starken Staubentwicklung in der Schmelzwanne, wobei der Staub sich auf den Seitenwänden und auf der Wannendecke absetzt und zusammen mit dem Feuerfestmaterial niedrig schmelzende Verbindungen eingeht. Dieser Effekt ist bekannt im Zusammenhang mit der Korrosion von Feuerfestmaterialien. Des Weiteren werden Teile des Staubes in die Regenerativkammern eingeschleppt. Der Staub reagiert auch dort mit dem Feuerfestmaterial und führt zu Korrosion. Weiterhin kann der Staub auch die Gitterung in den Regenerativkammern zusetzen und den Wirkungsgrad der Luftvorwärmung herabsetzen. Insbesondere bei Verwendung von vorgewärmtem Gemenge wird diese Art der Verstaubung mit den dargestellten Folgen noch verstärkt.

Prof. Dr. Wolfgang Trier hat in seinem Buch "Glasschmelzöfen, Konstruktion und Betriebsverhalten", Springer-Verlag Berlin Heidelberg New York Tokyo 1984, auf Seite 154 das Problem der Verstaubung mit allen damit verbundenen Nachteilen beschrieben und u.a. angeregt, den Einlegevorbau zu vergrößern.

Unabhängig von der oben beschriebenen schädlichen Staubentwicklung verliert bei den kurz bauenden Vorlegebauten das Beschickungsgut zur Atmosphäre hin auch Wärmeenergie, die für den Schmelzprozess verloren geht.

In der GB-A-1 425 461 wird eine Beschickungsvorrichtung für eine Glasschmelzanlage mit einer U-Flammenwanne beschrieben, mit der es möglich ist, das Schmelzgut in verschiedene Richtungen im Einlegevorbau einzulegen.

Dazu werden mehrere Anriebe verwendet, die die Bewegung der Chargiervorrichtung kontrollieren. Einer der Antriebe positioniert die Maschine, während die Beschickung unterbrochen wird. Wenn sich der Justierantrieb in seiner Ruheposition befindet, wird der zweite Antrieb für den Beschickungsvorgang aktiviert. In der Patentschrift wird zwar auf die Probleme hingewiesen, die mit der Beschickung verbunden sind, z.B. die Verstaubung und die Verglasung der Einlage in dem Einlegevorbau, es findet sich aber kein Hinweis auf die Ausgestaltung des Einlegevorbaus.

Auch in der US-A-5 906 119 wird auf die Beschickungsvorbauten eingegangen. Es wird vorgeschlagen, dass in den Vorbauten im Oberofen Öffnungen vorgesehen werden, mit Hilfe derer das Abgas aus der Schmelzanlage abgezogen wird. Dabei entsteht aber eine heftige Strömungsgeschwindigkeit, was damit zwangsläufig zu einer hohen Staubbeladung des Abgases führt. Bei dieser Druckschrift geht es jedoch nicht um die Ausgestaltung der Beschickungsvorbauten, sondern um die Ausgestaltung der Gas/Sauerstoff-Brenner. Diese sollen zwei getrennte Zuführungen haben. Damit soll eine Art gestufte Verbrennung erfolgen. Die Medien Sauerstoff und Brennstoff sollen durch die örtliche Trennung etwas später miteinander reagieren. Damit kann die Kerntemperatur der Flamme gesenkt werden und die Flammenausbreitung vergrößert werden. Die damit verbundene Konvektion ist jedoch unerwünscht.

Aufgabe der vorliegenden Erfindung ist es nun, die Beschickungstechnik bei Glas-Schmelzwannen der eingangs genannten Art dahingehend zu verbessern, dass Wärmeverluste an die Atmosphäre und ein Staubtransport in den Oberofen der Schmelzwanne verringert werden und dennoch die Aufheizung des Beschickungsguts intensiviert wird.

Diese Aufgabe wird erfindungsgemäß durch die im kennzeichnenden Teil des Anspruchs 1 genannten Merkmale gelöst.

In der Praxis bedeutet dies, dass man bei einer Höhe (H) des Gasraums über der Ebene (E-E) des Wannenrandes von mindestens 600 mm, einer inneren Länge (LV) des Einlegevorbaus bis zur Innenkante des Oberofens der Schmelzwanne von etwa 2.250 mm und bei einem Verhältnis der Beschickungsmenge (Durchsatz) zur Fläche des Einlagevorbaus [P/F = K] von kleiner 3,5 t/h·m² eine Verweilzeit von etwa 2,5 min hat, die für eine Versinterung an der Oberfläche der Gemengehaufen ausreicht. Ein besonders guter Wärmeaustausch zwischen dem Gasraum in dem Einlegevorbau und dem Gasraum über der Glasschmelze wird dadurch erreicht, dass die Lage des Schmelzspiegels im Gasraum in dem Einlegeraum so gewählt wird, dass gegenüber der höchsten Stelle der Überdachung ein Mindestabstand von 600 mm verbleibt.

Ein weiterer Vorteil der erfindungsgemäßen Maßnahmen besteht darin, dass im eigentlichen Bereich der Schmelzwanne das Aufschmelzen zeitlich und räumlich verkürzt wird, was zu einer Leistungssteigerung der Anlage führt.

Aufgrund der erfindungsgemäßen Merkmale wird im Bereich der Einlegevorbauten keine nennenswerte Gasströmung erzeugt, so dass die Gefahr einer Staubverschleppung stark reduziert wird. Während unter der Wannendecke im Kernstrom des Verbrennungsbereichs mittlere Strömungsgeschwindigkeiten zwischen 10 und 15 m/sec gemessen werden, liegt die mittlere Strömungsgeschwindigkeit in den Einlegevorbauten lediglich unterhalb von 1 m/sec, wohl aber wurden Temperaturen bis über 1.300° C gemessen, was zu einer hohen Energieübertragung von ca. 50 kW/m² führt.

Bei einem solchen Verfahren ist gewährleistet, dass das Beschickungsgut ausreichend versintert ist, wenn es von dem Einlegevorbau auf die Oberfläche der Glasschmelze verschoben wird.

Es hat sich als vorteilhaft erwiesen, wenn der Transportweg des Beschickungsguts im Einlegevorbau zwischen 2,25 und 5 m gewählt wird.

Erfindungsgemäß beträgt die Länge (LG) der Überdachung des Gasraums über der Glasschmelze mindestens 1.200 mm.

Es hat sich als vorteilhaft erwiesen, dass der Einlegevorbau an seinem Eingang in die Schmelzwanne eine Breite (BV) von mindestens 1.000 mm aufweist. Damit ist ein sicherer Übergang des Beschickungsgutes in die Schmelzwanne gewährleistet.

Gemäß einer weiteren Ausführungsform weist die Beschickungsvorrichtung einen Schneckenförderer aufweist, mittels dem das Beschickungsgut in den Einlegevorbau und auf die Schmelze eindosierbar ist, wobei der Schneckenförderer erfindungsgemäß ein Gehäuse aufweist, das abgedichtet in die Stirnwand des Einlegevorbaus eingesetzt ist.

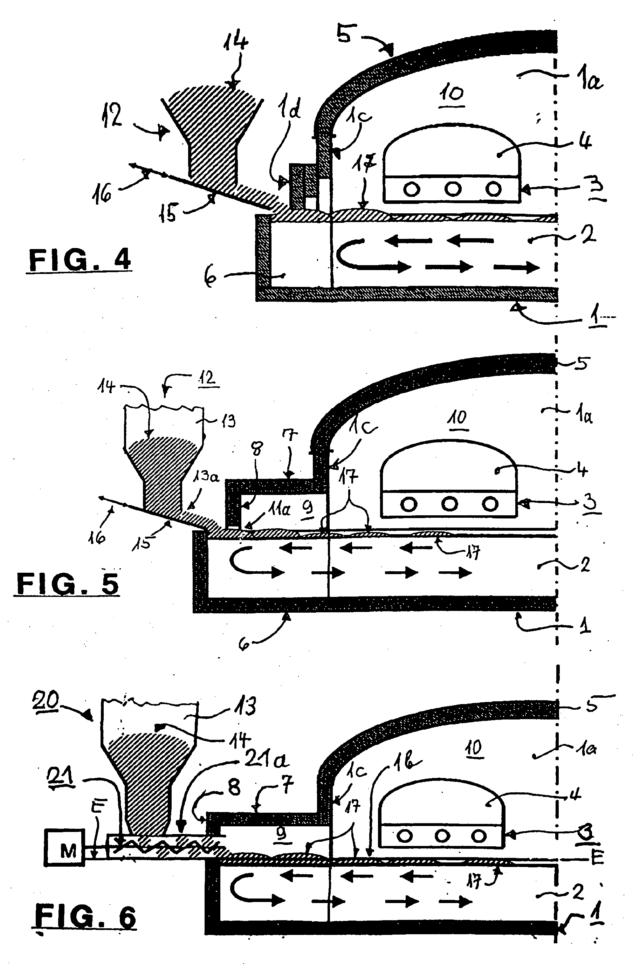

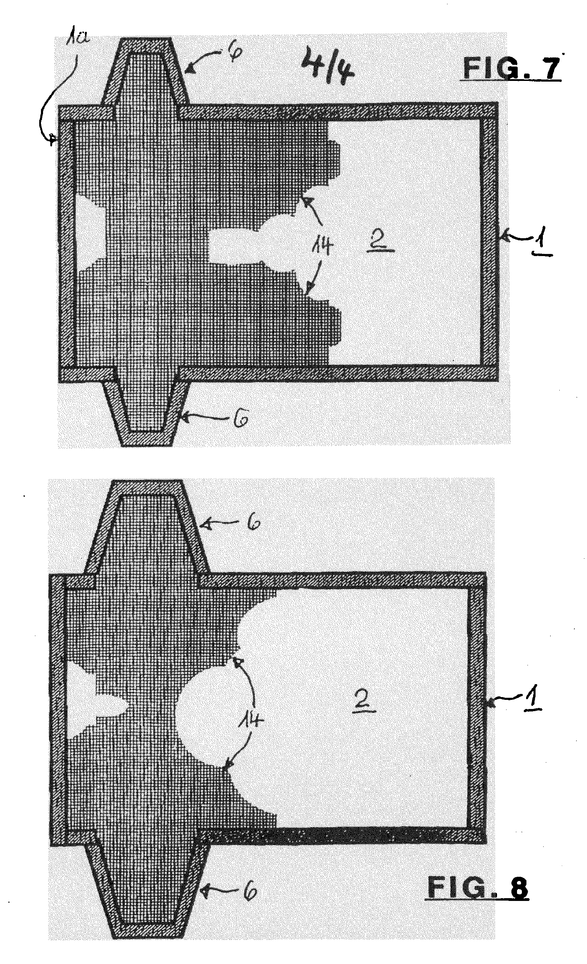

Weiterbildungen, Vorteile und Anwendungsmöglichkeiten der Erfindung ergeben sich aus der nachfolgenden Beschreibung von zwei Ausführungsbeispielen und der Zeichnungen, wobei die Figuren 4 und 7 einen Vergleich mit dem Stand der Technik zeigen.

Es zeigen:
- Figur 1: einen vertikalen Querschnitt durch eine erfindungsgemäße Glas-Schmelzwanne in Verbindung mit vertikalen Längsschnitten durch zwei Einlegevorbauten,
- Figur 2: eine Ausschnittvergrößerung aus Figur 1 mit Maßangaben,
- Figur 3: einen vergrößerten Ausschnitt aus einem Horizontalschnitt durch eine Wannenecke und den benachbarten Einlegevorbau,
- Figur 4: eine Figur 1 entsprechende Darstellung einer Glas-Schmelzwanne gemäß dem Stand der Technik mit einem üblichen Einlegevorbau,
- Figur 5: die linke Hälfte von Figur 1 in einem vergrößerten Maßstab und mit einem Einlegeblech als Beschickungsvorrichtung im Betrieb,
- Figur 6: die linke Hälfte von Figur 1 in einem vergrößerten Maßstab und mit einem Schneckenförderer als Beschickungsvorrichtung im Betrieb,
- Figur 7: eine Draufsicht auf eine Glas-Schmelzwanne im Betriebszustand mit einem Teppich aus ungesintertem Beschickungsgut (Stand der Technik) und
- Figur 8: eine Draufsicht auf den Inhalt einer erfindungsgemäßen Glas-Schmelzwanne analog Figur 7 mit einem Teppich aus gesintertem Beschickungsgut.

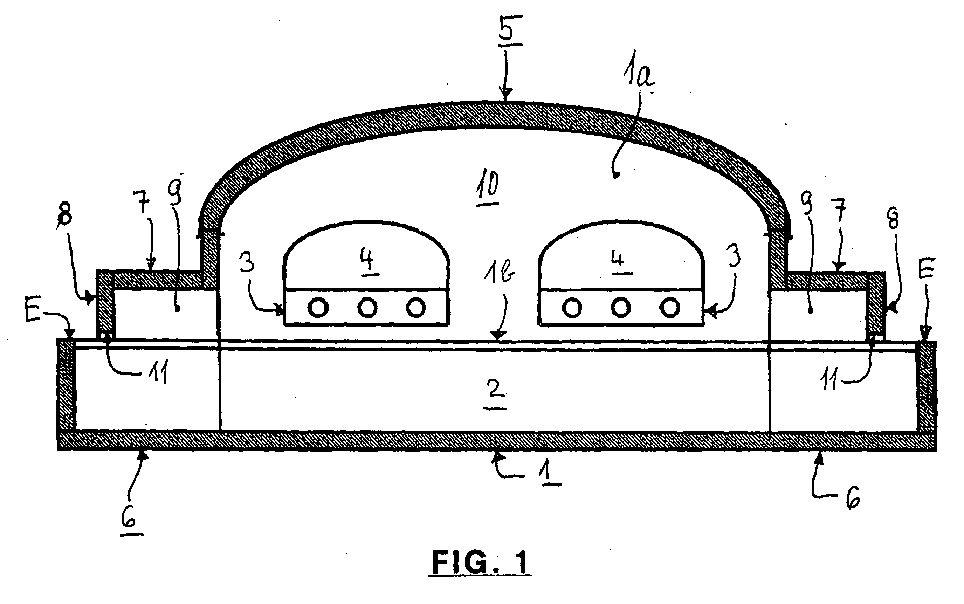

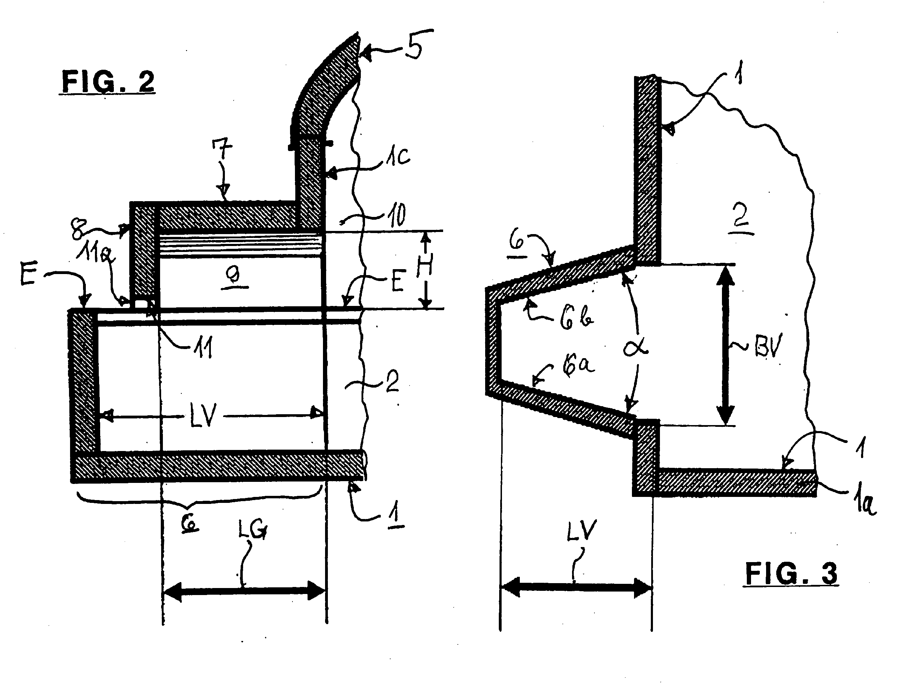

In den Figuren 1 und 2 ist eine Glas-Schmelzwanne 1 dargestellt, die mit ihrem Inhalt, einer Glasschmelze 2, durch Brennerbatterien 3 beheizt wird, die in der Stirnwand 1a der Schmelzwanne 1 unterhalb der Mündung je eines Schachtes 4 für Verbrennungsluft angeordnet sind. Diese Schächte 4 stehen mit Wärmetauschern in Verbindung, beispielsweise mit solchen aus der Gruppe der Regeneratoren. Die Brennerbatterien 3 und die Schächte 4 werden in bekannter Weise, z.B. im 15- bis 30-Minutentakt, alternierend betrieben, d.h., während die eine Brennerbatterie 3 betrieben wird, werden die Abgase über den jeweils anderen Schacht 4 abgezogen, und umgekehrt.

Beiderseits der Schmelzwanne 1 befinden sich in spiegelsymmetrischer Anordnung sogenannte Einlegevorbauten 6, kurz auch Vorbauten genannt, mit je einer Überdachung 7, die nach oben gewölbt sein kann, und mit einer Stirnwand 8, die zusammen einen Gasraum 9 umschließen. Diese Einlegevorbauten 6 stehen mit einem Gasraum 10 über der Glasschmelze 2 in der Schmelzwanne 1 in Verbindung. Die Schmelzwanne 1 und die Einlegevorbauten 6 enden nach oben in einer gemeinsamen waagrechten Ebene (E-E).

Die Stirnwände 8 schließen unten mit einer Unterkante 11 ab, die über der Ebene (E-E) einen möglichst eng begrenzten Beschickungsspalt 11a für die Eindosierung von Beschickungsgut frei lässt. Die Länge (LG) des Gasraums 9 unterhalb der Überdachung 7 beträgt minimal etwa 70% der inneren Länge (LV) des Einlegevorbaus 6, und zwar derart, dass zwischen der Stirnwand 8 und dem benachbarten Rand von Schmelzwanne 1 und Einlegevorbau 6 noch eine Fläche für die Ablage des Beschickungsguts 14 über der Glasschmelze 2 frei bleibt.

Wie aus den Figuren 2 und 3 zu ersehen ist, soll die Höhe H des Gasraums 9 über der Ebene E-E mindestens 600 mm betragen, um den Eingang von Energie durch Strahlung und/oder Flammengase zu fördern. Es sind aber auch Werte bis zu 900 mm und darüber denkbar. Bei einem nach außen abfallenden Verlauf der Überdachung 7 gilt das Maß H für die Höhe am Eintritt des Vorbaus 6 in den Gasraum 10 der Schmelzwanne 1.

Aus Figur 3 ist zu ersehen, dass der Einlegevorbau 6 zwei Seitenwände 6a und 6b besitzt, die mit der Schmelzwanne 1 verbunden sind und einen Winkel α zwischen sich einschließen, der sich in Richtung auf die Schmelzwanne 1 öffnet. Dies und die Breite BV von mindestens 1.000 mm, vorzugsweise von mindestens 1.500 mm, an der Übergangsstelle, ermöglichen es, dass die Strömungswege der Glasschmelze auch innerhalb der Einlegevorbauten 6 verlaufen und in ganz erheblichen Umfang an dem Wärmeaustausch beteiligt sind.

Die Figur 4 zeigt in einer entsprechenden Darstellung den Stand der Technik, wobei zum besseren Verständnis für entsprechende Teile die vorhergehend verwendeten Bezugszeichen einheitlich beibehalten wurden. In einer Seitenwand 1c der Schmelzwanne 1 ist über dem sehr kurzen Einlegevorbau 6 eine Öffnung angeordnet, der ein Absperrschieber 1 d vorgelagert ist. Der dadurch umgrenzte Raum ist so winzig, dass weder die Flammengase noch deren Strahlung einen nennenswerten Einfluss auf den Wärmeeintrag in das Beschickungsgut 14 von oben haben. Auch der Wärmeeingang durch die Glasschmelze 2 von unten her (dicke Pfeile) ist sehr begrenzt, so dass das Beschickungsgut 14 ungesintert in die Schmelzwanne 1 treibt. Die Wirkung wird in Verbindung mit der Figur 7 näher erläutert.

Die Figur 5 zeigt eine entsprechende Ausführungsform gemäß der vorliegenden Erfindung. Dabei ist dem Einlegevorbau 6 und der Überdachung 7 eine Beschickungsvorrichtung 12 zugeordnet, die einen Vorratsbehälter 13 mit einem regelbaren Bodenauslass 13a für das Beschickungsgut 14 enthält. Darunter ist ein schräg stehendes Einlegeblech 15 angeordnet, das durch einen hier nur angedeuteten Antrieb 16 in periodische Oszillationen mit niedriger Frequenz versetzt wird. Dadurch wird das Beschickungsgut 14 in Richtung auf den Beschickungsspalt 11a portionsweise auf die Oberfläche der Glasschmelze 2 aufgegeben und treibt in Form von Kissen 17 durch den Gasraum 9 in Richtung auf die Schmelzwanne 1, in der es auf einen Schmelzenausgang umgelenkt wird.

Die Figur 6 zeigt eine alternative Ausführungsform. Die innere Länge der Überdachung 7 entspricht hier der inneren Länge LV des Einlegevorbaus 6 in den Figuren 2 und 3. Außerhalb des Einlegevorbaus 6 ist eine Beschickungsvorrichtung 20 angeordnet, die einen Vorratsbehälter 13 mit einem regelbaren Bodenauslass für das Beschickungsgut 14 enthält. Darunter ist ein horizontaler Schneckenförderer 21 angeordnet, der durch einen Motor M angetrieben wird. Der Schneckenförderer 21 besitzt ein zylindrisches Gehäuse 21a, das abgedichtet durch die Stirnwand 8 hindurch geführt ist. Dadurch wird das Beschickungsgut 14 innerhalb des Einlegevorbaus 6 auf die Oberfläche der Glasschmelze 2 aufgegeben und treibt in Form von Kissen 17 durch den Gasraum 9 in Richtung auf die Schmelzwanne 1, in der es auf einen hier nicht gezeigten Schmelzenausgang umgelenkt wird.

Die räumliche Gestaltung des Volumens und die Temperaturführung innerhalb der Einlegevorbauten 6 sind dabei so gewählt, dass sich innerhalb der Glasschmelze 2 ein Strömungsverlauf gemäß den eingezeichneten Pfeilen einstellt. Durch thermokinetische Effekte stellt sich unterhalb des Beschickungsguts 14 eine Strömung in Richtung auf das innere Ende der Einlegevorbauten 6 ein, wodurch die Glasschmelze 2 einen Teil ihrer Wärmekapazität an das Beschickungsgut 14 abgibt. Durch die Abkühlung sinkt die Glasschmelze 2 in Richtung des Bodens des Einlegevorbaus 6 und der Schmelzwanne 1 ab und kehrt in diese zurück. Von oben wird das Beschickungsgut 14 durch die in den Gasraum 9 eindringende Wärmestrahlung beheizt. Durch diesen kombinatorischen Effekt wird das Beschickungsgut 14 auf eine hohe Temperatur aufgeheizt, die ein teilweises Verschmelzen der Partikel begünstigt, ein Vorgang, den man auch mit dem Begriff Sintern belegen kann, und der eine Staubentwicklung weitgehend verhindert.

Die Figur 7 zeigt in einer senkrechten Draufsicht auf die Schmelzwanne die Verteilung des ungesinterten Beschickungsguts 14, wie sie beim Stand der Technik auftritt. Dabei wird ein verhältnismäßig großer Anteil der Schmelzen-Oberfläche abgedeckt, so dass der Wärmeeintrag in die Schmelze 2 verhältnismäßig gering ist.

Die Figur 8 zeigt in einer senkrechten Draufsicht auf die Schmelzwanne die Verteilung des gesinterten Beschickungsguts 14, wie dies beim Erfindungsgegenstand der Fall ist. Es wird ein deutlich größerer Anteil der Schmelzen-Oberfläche frei gelassen, weshalb der Wärmeeintrag in die Schmelze 2 entsprechend größer ist.

Wie aus den Figuren 4 bis 8 zu ersehen ist, ergibt sich bei der erfindungsgemäßen Glas-Schmelzwanne ein Kombinationseffekt. Die räumliche Gestaltung des Volumens und die Temperaturführung innerhalb der Schmelzwanne 1 sind so gewählt, dass sich innerhalb der Glasschmelze 2 ein Strömungsverlauf gemäß den Pfeilen in den Figuren 4 bis 6 einstellt. Durch den thermokinetischen Effekt stellt sich unterhalb des Beschickungsguts 14 eine Strömung in Richtung auf die Stirnwand 1 a und die Brennerbatterien 3 und in die Einlegevorbauten 6 ein, wodurch die Glasschmelze auch hier einen Teil ihrer Wärmekapazität nach oben an das Beschickungsgut 14 abgibt. Durch die Abkühlung sinkt die Glasschmelze 2 in Richtung des Bodens der Schmelzwanne 1 ab und fließt zum Schmelzenausgang der Schmelzwanne. Damit wird das Beschickungsgut 14 bis zum vollständigen Schmelzen von unten und oben aufgeheizt.

Die Figur 8 verdeutlicht, dass sich das Beschickungsgut 14, ausgehend von dem jeweiligen Einlegevorbau 6, durch die Oberflächenströmung, wie sie in den Figuren 5 und 6 gezeigt ist, durch Sinterung zu einer Art "Teppich" verfestigt, der einen sehr großen Anteil der Schmelzenoberfläche frei lässt, was den Wärmeeingang durch Strahlung begünstigt. Insbesondere wird dadurch auch die Verschleppung von Beschickungsgut in den Schmelzenausgang verhindert.

Bei der Auslegung des Einlegevorbaus spielt die Kennzahl K eine entscheidende Rolle. K ist das Verhältnis zwischen dem Durchsatz (P) des Beschickungsguts durch den Einlegevorbau (in Tonnen/Std.) und der inneren Oberfläche (F) des Einlegevorbaus (in m²), wobei die Kennzahl K bei einem Transportweg durch den Einlegevorbau gemäß den Abmessungen LV und LG des Einlegevorbaus einen Wert von 3,5 t/h·m² nicht überschreiten soll.

Letztendlich geht es darum, den Einlegevorbau so auszubilden, dass die thermischen und mechanischen Voraussetzungen geschaffen sind, um ausreichende Mengen von Beschickungsgut in einem teilweise gesinterten Zustand über den Einlegevorbau in eine Schmelzwanne einzubringen und dabei die Schwimmfähigkeit der Sinterprodukte aufrecht zu halten.

Für das Verfahren bedeutet dies, dass das Aufheizen des Beschickungsguts unter Einwirkung der Komponenten der Vorrichtung erfolgt. Dabei soll vor allem der K-Wert einen Betrag von 3,5 t/h·m² nicht überschreiten.

### Bezugszeichenliste:

| | |
|---|---|
| BV | Breite |
| E-E | Ebene |
| F | Oberfläche |
| H | Höhe |
| K | Kennzahl |
| LG | Länge |
| LV | Länge |
| M | Motor |
| P | Durchsatz |
| *α* | Winkel |

| | | | |
|---|---|---|---|
| 1 | Glas-Schmelzwanne | 10 | Gasraum |
| 1a | Stirnwand | 11 | Unterkante |
| 1b | Wannenrand | 11a | Beschickungsspalt |
| 1c | Seitenwand | 12 | Beschickungsvorrichtung |
| 1d | Absperrschieber | 13 | Vorratsbehälter |
| 2 | Glasschmelze | 13a | Bodenauslass |
| 3 | Brennerbatterien | 14 | Beschickungsgut |
| 4 | Schacht | 15 | Einlegeblech |
| 5 | Wannendecke | 16 | Antrieb |
| 6 | Einlegevorbauten | 17 | Portionen |
| 6a | Seitenwand | 20 | Beschickungsvorrichtung |
| 6b | Seitenwand | 21 | Schneckenförderer |
| 7 | Überdachung | 21a | Gehäuse |
| 8 | Stirnwand | | |
| 9 | Gasraum | | |

## Patentansprüche

1. Verfahren zum Aufheizen von Beschickungsgut (14) in Glas-Schmelzwannen (1) mit U-Flammenbeheizung, bei denen die Glas-Schmelzwannen mindestens einen seitlichen Einlegevorbau (6) für die Eingabe des Beschickungsguts (14) und mindestens eine Beschickungsvorrichtung (12; 20) aufweisen, und wobei der Einlegevorbau (6) mit einer isolierenden Überdachung (7) versehen ist und zur Beschickungsvorrichtung (12) hin eine Stirnwand (8) aufweist, die mit der Überdachung (7) einen Gasraum (9) einschließt, der zur Glas-Schmelzwanne (1) hin offen ist, **dadurch gekennzeichnet, dass** der Gasraum (9) über der Ebene (E-E) des Wannenrandes (1 b) eine Höhe (H) von mindestens 600 mm aufweist, wodurch das Beschickungsgut (14) in dem Einlegevorbau (6) von oben durch das Eindringen von Wärmestrahlung aus dem Wannenraum in den Einlegevorbau (6) aufgeheizt und verschmolzen wird, dass der Einlegevorbau (6) in Richtung auf die Schmelzwanne (1) eine innere Länge (LV) von mindestens 2.250 mm hat, dass der Transportweg des Beschickungsguts (14) im Einlegevorbau (6) derart lang ist, dass wegen der damit verbundenen langen Verweildauer des Beschickungsguts (14) im Einlegevorbau das Beschickungsgut bis zu einem mindestens teilweisen Verschmelzen aufgeheizt wird, dass die Breite (BV) des Transportwegs des Beschickungsguts (14) im Einlegevorbau (6) am Eingang in die Glas-Schmelzwanne (1) mindestens 1,0 m beträgt, so dass das Beschickungsguts (14) in dem Einlegevorbau von unten durch eine Strömung und durch das Eindringen der Glasschmelze (2) zusätzlich aufgeheizt wird, dass das Beschickunggut (14) in einem mindestens teilweise verschmolzenen Zustand auf die Oberfläche der Glasschmelze (2) in die Glas-Schmelzwanne (1) verschoben wird und dass die das Verhältnis zwischen dem Durchsatz (P) des Beschickungsguts (14) durch den Einlegevorbau (6) (in Tonnen/Std.) und der inneren Oberfläche (F) des Einlegevorbaus (in m²) bildende Kennzahl (K) bei einem Transportweg durch den Einlegevorbau (6) gemäß den Abmessungen (LV) und (H) des Einlegevorbaus (6) den Wert 3,50 nicht überschreitet.

2. Verfahren nach Anspruch 1, **dadurch gekennzeichnet, dass** der Transportweg des Beschickungsguts (14) im Einlegevorbau (6) zwischen 2,25 m und 5 m gewählt wird.

3. Verfahren nach Anspruch 1, **dadurch gekennzeichnet, dass** die Überdachung (7) des Einlegevorbaus (6) eine Länge (LG) von mindestens 1.200 mm hat.

4. Verfahren nach Anspruch 1, **dadurch gekennzeichnet, dass** das Beschickungsgut (14) durch einen Schneckenförderer (21) der Beschickungsvorrichtung (20) in den Einlegevorbau (6) und auf die Glasschmelze (2) eindosiert wird.

## Claims

1. A method for heating batches (14) for an end-fired glass-melting furnace (1), in which the glass-melting furnace features at least one insertable lateral extension (6) for the input of the batches (14) and at least one charging device (12; 20), wherein the insertable extension (6) is provided with an insulating roofing (7) and features an end wall (8) toward the charging device (12), and wherein said end wall encloses a gas chamber (9), which is open toward the glass-melting furnace (1), together with the roofing (7), **characterized in that** the gas chamber (9) has a height (H) of at least 600 mm above the plane (E-E) of the furnace edge (1b) such that the batch (14) in the insertable extension (6) is heated and fused from above due to the penetration of thermal radiation from the furnace chamber into the insertable extension (6), **in that** the insertable extension (6) has an internal length (LV) of at least 2250 mm in the direction of the glass-melting furnace (1), **in that** the transport path of the batch (14) in the insertable extension (6) is so long that the batch is heated until it at least partially fuses due to the resulting long residence time of the batch (14) in the insertable extension, **in that** the width (BV) of the transport path for the batch (14) in the insertable extension (6) amounts to at least 1.0 m at the inlet into the glass-melting furnace (1) such that the batch (14) in the insertable extension is additionally heated from below due to a flow and due to the penetration of the molten glass (2), **in that** the batch (14) is in an at least partially fused state displaced on the surface of the molten glass (2) in the glass-melting furnace (1), and **in that** the characteristic number (K) forming the ratio between the throughput (P) of the batch (14) through the insertable extension (6) (in tons/hour) and the inner surface (F) of the insertable extension (in m²) does not exceed the value 3.50 at a transport path through the insertable extension (6) according to the dimensions (LV) and (H) of the insertable extension (6).

2. The method according to claim 1, **characterized in that** the transport path of the batch (14) in the insertable extension (6) is chosen between 2.25 m and 5 m.

3. The method according to claim 1, **characterized in that** the roofing (7) of the insertable extension (6) has a length (LG) of at least 1200 mm.

4. The method according to claim 1, **characterized in that** the batch (14) is metered into the insertable extension (6) and onto the molten glass (2) by a screw conveyor (21) of the charging device (20).

## Revendications

1. Procédé de chauffage de matière première (14) dans des fours (1) à boucle de fusion de verre, lesquels fours présentant au moins une avancée d'insertion latérale (6) pour l'apport de la matière première (14) et au moins un dispositif de chargement (12 ; 20) et l'avancée d'insertion (6) étant pourvue d'une toiture isolante (7) et présentant en direction du dispositif de chargement (12) une paroi frontale (8) qui circonscrit avec la toiture (7) une chambre à gaz (9) qui est ouverte en direction du four (1), **caractérisé en ce que** la chambre à gaz (9) a au-dessus du plan (E-E) du bord du four (1b) une hauteur (H) d'au moins 600 mm, ce qui a pour effet que la matière première (14) est chauffée et fondue dans l'avancée d'insertion (6) par le haut par la pénétration de rayonnement thermique provenant de l'espace du four dans l'avancée d'insertion (6), que l'avancée d'insertion (6) a en direction du four (1) une longueur intérieure (LV) d'au moins 2 250 mm, que le parcours de transport de la matière première (14) dans l'avancée d'insertion (6) est assez long pour que, du fait de la longue durée de séjour corrélative de la matière première (14) dans l'avancée d'insertion (6), la matière première soit chauffée jusqu'à une fusion au moins partielle, que la largeur (BV) du parcours de transport de la matière première (14) dans l'avancée d'insertion est d'au moins 1,0 m à l'entrée du four (1), de sorte que la matière première est chauffée en plus par le bas dans l'avancée d'insertion par la pénétration du verre en fusion (2), que la matière première (14) est déplacée en état au moins partiellement fondu vers la surface du verre en fusion (2) dans le four à verre (1) et que la caractéristique (K) établissant le rapport entre le débit (P) de matière première (14) à travers l'avancée d'insertion (6) (en tonnes/heure) et la surface intérieure (F) de l'avancée d'insertion (en m²), avec un parcours de transport dans l'avancée d'insertion (6) conforme aux dimensions (LV) et (H) de l'avancée d'insertion (6) ne dépasse pas la valeur de 3,50.

2. Procédé selon la revendication 1, **caractérisé en ce que** le parcours de transport de la matière première (14) dans l'avancée d'insertion (6) est sélectionné entre 2,25 m et 5 m.

3. Procédé selon la revendication 1, **caractérisé en ce que** la toiture (7) de l'avancée d'insertion (6) a une longueur (LG) d'au moins 1 200 mm.

4. Procédé selon la revendication 1, **caractérisé en ce que** la matière première (14) est dosée par un convoyeur à vis (21) du dispositif de chargement (20) dans l'avancée d'insertion (6) et sur le verre en fusion (2).
